(19) Europäisches Patentamt
European Patent Office
Office européen des brevets

(11) Publication number: 0 295 562 A2

# (12) EUROPEAN PATENT APPLICATION

(21) Application number: 88109132.6

(22) Date of filing: 08.06.88

(51) Int. Cl.4: C08F 265/04 , //(C08F265/04, 212:08)

(30) Priority: 19.06.87 US 64892

(43) Date of publication of application: 21.12.88 Bulletin 88/51

(84) Designated Contracting States: DE FR GB IT NL

(71) Applicant: GENERAL ELECTRIC COMPANY
1 River Road
Schenectady New York 12305(US)

(72) Inventor: Peascoe, Warren Joseph
RFD2, Quiet Knoll Road
West Stockridge Massachussetts 01266(US)

(74) Representative: Catherine, Alain
General Electric France Service de Propriété Industrielle 18 Rue Horace Vernet B.P. 76
F-92134 Issy-les-Moulineaux Cédex(FR)

## (54) Thermoplastic elastomer and process for making the same.

(57) Disclosed are thermoplastic elastomers comprising a crosslinked (meth)acrylate rubbery phase and an interpenetrating crosslinked styrenic resin phase, and processes for their manufacture and use. These compounds extrude smoothly to produce ripple-free surfaced three-dimensional articles. Such elastomers are useful per se and as modifiers, for example, of polymers.

EP 0 295 562 A2

# THERMOPLASTIC ELASTOMER AND PROCESS FOR MAKING THE SAME

This invention relates to thermoplastic elastomers comprising a crosslinked (meth)acrylate rubbery phase and an interpenetrating crosslinked styrenic resin phase, and to processes for their production and to articles made therefrom. More particularly, it relates to thermoplastic elastomers which extrude smoothly to substantially ripple-free surfaced articles, i.e., substantially free of melt fractures. Such elastomers are useful per se and as modifiers for other materials, such as plastics.

## BACKGROUND OF THE INVENTION

Thermoplastic elastomers (TPEs), also called elastoplastics, are versatile materials that combine the desirable properties of vulcanized elastomers with the processing features of thermoplastics. For example, TPEs can be stretched at normal temperatures with good elastic recovery. In addition, TPEs allow for high tensile strength without the need for curing or reinforcing fillers. Because they soften at higher temperatures, TPEs may be conventionally processed, e.g. injection-molded or extruded, and when cooled, their physical properties may be recovered in the finished article.

In terms of their applications, thermoplastic elastomers are useful in a number of areas, including the manufacture of molded goods, gaskets, wire coatings, and the like.

Impact resistant plastics compositions, which incorporate so-called core-shell materials, are known. See, e.g., Baer, U.S. 3,041,309; Vollmert, et al., U.S. 3,055,859; Ryan, et al., 3,426,101; Minton, U.S. 3,502,745. Also known from, e.g., Fischer, U.S. 3,806,558, are thermoplastic elastomers comprising monolefin copolymers and polyolefin plastics. The latter are elastomeric but the elasticity and oil resistance could stand improvement.

Yu et al., in U.S. 3,944,631, disclose impact resistant and weatherable thermoplastic compositions comprising from about 10 to about 50 weight percent of a crosslinked acrylate elastomer having a Tg of less than 25°C., from about 5 to about 35 weight percent of a crosslinked styrene-acrylonitrile copolymer and from about 15 to about 85 weight percent of a non-crosslinked or linear styrene-acrylonitrile copolymer. There is no suggestion by Yu et al that an intermediate produced by stopping their three-step process after two steps could be used as a thermoplastic elastomer.

Narkis et al., "Polymer," Vol. 26(9), pp. 1359-64, 1985, describe interpenetrating polymer networks IPNs), i.e., elastomeric emulsion IPNs, which are prepared by first polymerizing ethyl acrylate, butyl acrylate (or mixtures) of ethyl acetate and butyl acetate with ethylene glycol dimethacrylate as a crosslinker. Styrene containing divinylbenzene was then added dropwise to the crosslinked seed latex and polymerized. The isolated materials were simply compression molded and were neither injection molded nor extruded.

In another article, "Polymer Engineering and Science," Vol. 25, No. 5, pp. 257-263, Mid-April, 1985, dealing with rheological properties of elastomeric emulsion thermosetting (EMSET) interpenetrating network (IPN) or poly(ethyl acrylate), 70 weight percent, and polystyrene, 30 weight percent, Narkis et al. describe injection molding and the failure to extrude their products into smooth ripple-free extrudates, blaming the failure on melt fracture.

It has now been surprisingly discovered that thermoplastic elastomers comprising a crosslinked (meth)-acrylate rubbery phase and an interpenetrating crosslinked styrenic resin phase can be extruded smoothly to a substantially ripple-free surfaced, i.e., substantially melt-fracture-free three-dimensional articles if careful attention is paid to the procedure by which the thermoplastic elastomer is made. It is believed that it is critical to add the styrenic monomer substantially all at once to an emulsion comprising the crosslinked reaction produce of polyalkyl (meth) acrylate, e.g., polybutylacrylate. It is also important to pay particular attention to extrusion conditions, in general, for example, slower rates giving better surfaces; in general, higher temperatures giving smoother surfaces; and preferably, short times at elevated temperatures being used. In the forgoing connections, it is noteworthy that Narkis et al. add styrene monomer and crosslinker continuously to the seed latex instead of all at once, and they do not specifically deal with the extruder processing conditions used in great detail. The products of this invention because they extrude smoothly, are uniquely suitable to make a number of articles, such as gaskets, wire covering, hoses, and the like, as well as adhesives and fabric coatings. They also possess the unusual characteristics of being oil-resistant and thermoplastic. Most oil resistant elastomers of the thermoplastic elastomers of the prior art are not oil-resistant.

## SUMMARY OF THE INVENTION

According to this invention there are provided thermoplastic elastomers comprising a crosslinked (meth)acrylate rubber phase and an interpenetrating crosslinked styrenic resin phase, said thermoplastic elastomer being extrudable to a substantially ripple free surfaced three-dimensional article.

Preferred in accordance herein are such elastomers, further defined wherein said rubbery phase is crosslinked poly(butyl acrylate) and said styrenic phase comprises styrene crosslinked homopolymer or styrene/ acrylonitrile crosslinked copolymer.

Also contemplated are processes for the preparation of a thermoplastic elastomer comprising:

(1) emulsion polymerizing at least one (a) (meth) acrylate monomer in the presence of at least one (b) crosslinking agent to produce a crosslinked poly (meth)acrylate rubbery phase;

(2) adding to the emulsion substantially all at once a polymerizable mixture comprising:

(c) vinyl aromatic compound, alone, or in further combination with (meth)acrylonitrile, and at least one

(d) crosslinking agent, and emulsion polymerizing to produce a thermoplastic elastomer having a crosslinked poly (meth)acrylate rubbery phase and an interpenetrating crosslinked styrenic resin phase, and

(3) recovering said thermoplastic elastomer, said elastomer being smoothly extrudable to a substantially ripple-free surfaced three-dimensional article.

## DETAILED DESCRIPTION OF THE INVENTION

The interpolymer modifiers of the present invention are those having a crosslinked acrylate rubbery phase, preferably butyl acrylate. Associated with this crosslinked rubbery phase is a phase comprised of crosslinked styrenic resin, preferably styrene, which interpenetrates the crosslinked rubbery phase. Incorporation of small amounts of other monomers such as (meth)acrylonitrile within the resin also provides products within the scope of this invention. The interpenetrating network is provided when the monomers forming the resin phase are polymerized and crosslinked in the presence of the previously polymerized and crosslinked (meth)acrylate rubbery phase.

The interpolymer compositions may be formed by the following two-step, sequential polymerization process:

1. emulsion polymerizing an acrylate monomer charge of at least one $C_2$-$C_{10}$ alkyl or alkoxyalkyl acrylate, $C_8$-$C_{12}$ alkyl or alkoxyalkyl methacrylate, or compatible mixtures thereof , in an aqueous polymerization medium in the presence of an effective amount of a suitable di or polyethylenically unsaturated crosslinking agent for such type of monomer with the $C_4$-$C_8$ alkyl or alkoxyalkyl acrylates being the preferred acrylate monomers for use in this step;

2. emulsion polymerizing a monomer charge of styrene or styrene/(meth)acrylonitrile in an aqueous polymerization medium, also in the presence of an effective amount of a suitable di or polyethylenically unsaturated crosslinking agent for such monomers, said polymerization being carried out in the presence of the product from Step 1 so that the crosslinked (meth)acrylate and crosslinked vinyl aromatic, e.g., styrene or styrene/(meth)acrylonitrile components form an interpolymer wherein the respective phases interpenetrate one another.

The final product that is formed can be extruded smoothly to produce substantially ripple-free surfaced, i.e., substantially melt-fracture free, three-dimensional articles.

In greater detail, in conducting the aqueous emulsion polymerization step leading to the preparation of the crosslinked (meth)acrylate rubbery phase, there is preferably first prepared a monomer charge comprising an aqueous emulsion containing about 10 to 50 percent by weight, of one or more monomers, the identity of which will be described in detail hereinbelow and from about 0.2 to 2.0 percent by weight of the monomer mixture, of a water-soluble catalyst, such as ammonium, sodium or potassium persulfate, hydrogen peroxide or a redox system, such as a mixture of a persulfate with an alkali metal bisulfite, thiosulfate or hydrosulfite, is introduced, and the mixture is then heated at a temperature of from about 40° to 95° C for a period of about 0.5 to about 8 hours.

The (meth)acrylic elastomer phase comprises crosslinked (meth)acrylic polymers or copolymers having a Tg, i.e., a glass transition temperature, of less than about 25° C. These can be polymerized by means of free radical initiated emulsion techniques. These (meth) acrylic elastomer polymers should be crosslinked so that they can retain their size and shape during subsequent polymer processing steps. This crosslinking can be achieved during the polymerization of the elastomer if a polyfunctional ethylenically unsaturated

monomer is included in the polymerization recipe. As used in this disclosure, the term "crosslinked" denotes a polymer which at ambient temperatures is substantially insoluble in such organic solvents as tetrahydrofuran or cyclohexanone.

Examples of (meth)acrylic elastomers that can be used include the crosslinked polymers of the $C_2$-$C_{10}$ alkyl acrylate and the $C_8$-$C_{12}$ alkyl methacrylate monomers, preferably the $C_4$-$C_8$ alkyl acrylates, such as poly(n-butyl acrylate), poly(ethyl acrylate) and poly (2-ethylhexylacrylate). At least one acrylate monomer is utilized in this step. If desired, the monomer charge may contain small amounts, i.e., 1 to 20 percent by weight of the amount acrylate monomer, of optional monomers including styrene, acrylonitrile, methacrylonitrile, methyl methacrylate, methacrylic acid, acrylic acid, vinylidene chloride, vinyl toluene and any other ethylenically unsaturated monomer copolymerizable with the acrylate monomer selected for use. Special mention is made of alkoxyalkyl (meth)acrylates, specifically ethoxyethyl and methoxymethyl (meth)-acrylates, and acrylonitrile which will improve oil resistance while maintaining a low Tg.

In order to crosslink the (meth)acrylate monomer, from about 0.05 to about 10, preferably 0.1 to 5 percent by weight based on the weight of acrylate monomer, of at least one crosslinking agent is used. This crosslinking agent is for the purposes of this invention a di or polyfunctional ethylenically unsaturated monomer having at least one vinyl group of the formula:

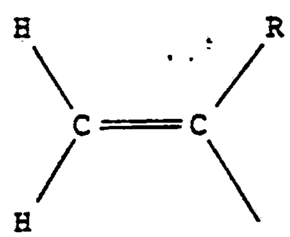

wherein R is hydrogen or lower alkyl. As is well known in the art the vinyl groups on the crosslinking monomer can be the same, e.g., divinyl benzene, trimethylol propane triacrylate, etc., or different, e.g., allyl methacrylate, diallyl fumarate, diallyl maleate, etc. Examples of other suitable crosslinking monomers which are known to persons in the art and which can be used are triethylene glycol dimethacrylate, ethylene glycol dimethacrylate, tetraethylene glycol dimethacrylate, polyethylene glycol dimethacrylate, 1,3-butylene glycol diacrylate, 1,4-butanediol diacrylate, diethylene glycol diacrylate, diethylene glycol dimethacrylate, 1, 6-hexanediol diacrylate, 2,2-dimethylpropane 1,3-diacrylate, triallyl isocyanurate, divinyl benzene, pentaerythritol tetramethacrylate, dipentaerythritol monohydroxypenta-acrylate, pentaaerythritol triacrylate, ethoxylated trimethylolpropane triacrylate, polyethylene glycol diacrylate tetraathylene glycol diacrylate, pentaerythritol tetraacrylate, 1,3-butylene glycol dimethacrylate, tripropylene glycol diacrylate, ethoxylated bisphenol A dimethacrylate, ethoxylated bisphenol A diacrylate, trimethylolpropane triacrylate, trimethylolpropane trimethacrylate, mixtures of any of the foregoing, and the like.

Optimum results are obtained by the use of a crosslinked copolymer containing from about 95 to about 99.9 percent by weight of n-butyl acrylate and from about 0.1 to about 5 percent by weight, of butylene glycol diacrylate.

The emulsifer which is used is at least one of the following conventional types: an anionic emulsifier, e.g., the $C_2$-$C_{22}$ carboxylic acids, the sulfates or, sulfonates of $C_6$-$C_{22}$ alcohols or alkyl phenols; a non-ionic emulsifier, e.g., the addition products of alkylene oxides to fatty acids, amines or amides; a combination of the foregoing anionic and non-ionic emulsifiers; or the cationic emulsifiers, e.g., a quaternary ammonium containing compound. The amount of emulsifier should be present from about 0.5 to about 5 percent by weight in the emulsion.

In the prior disclosures of Yu et al., U.S. 3,944,631, it has been found that regardless of the particular emulsifier being utilized in preparing the rubber polymer latex, its polymerization in large scale commercial equipment is greatly facilitated by introducing the monomer charge to the system in several portions over a period of from 1 to 3 hours. Thus, where this is not done and the total monomer charge is introduced in one portion, the resulting exothermic polymerization reaction often becomes virtually uncontrollable leading to overheating which, in turn, may set up, i.e., coagulate, the resulting polymer latex. However, by dividing the monomer charge and introducing it in about several portions, the resulting polymerization reaction remains controllable and overheating and coagulation can be prevented. An initiator is also present in the emulsion in an amount ranging from about 0.0005 to 2 percent by weight of the (meth)acrylate monomer. Suitable for use are watersoluble peroxidic compounds, e.g., hydrogen peroxide and alkali metal and ammonium persulfates, oil soluble organic peroxides and azo compounds, e.g., benzoylperoxide, azobisisobutyronitrile

and the like, used singly or in combination. Redox catalysts, e.g., mixtures of peroxidic catalysts with reducing agents, such as hydrazine, alkali metal bisulfites, thiosulfates, and hydrosulfites, and soluble oxidizable sulfoxyl compounds can also be used. Preferred as the initiator herein is ammonium persulfate.

A chain transfer agent such as an alkyl mercaptan, e.g., t-dodecyl mercaptan, toluene, xylene, chloroform, halogenated hydrocarbons and the like may also be used. A buffer to adjust the pH may be used.

The next step in the preferred embodiment of preparing the interpolymers of the present invention is the emulsion polymerization of a mixture of vinyl aromatic, e.g., styrene or styrene and acrylonitrile, in the presence of a minor portion of at least one di functional or polyfunctional crosslinking monomer form, for example, a crosslinked styrene homopolymer or styrene-acrylonitrile co-polymer. This emulsion polymerization is carried out in the presence of the crosslinked (meth)acrylate rubbery phase by adding the styrene or styrene-acrylonitrile charge to the previously prepared aqueous emulsion of crosslinked (meth)acrylate rubbery phase. The amount of styrene or styrene-acrylonitrile which is added ranges from about 60 to about 10, preferably from about 50 to about 20 percent based upon the weight of the final product which will be formed. When present, (meth)acrylonitrile preferably comprises from about 15 to about 45 parts by weight to, correspondingly, about 85 to about 55 parts of vinyl aromatic monomer. In order to produce the thermoplastic elastomers of this invention which can be smoothly extruded to form substantially ripple-free surfaced i.e., melt-fracture free, three-dimensional articles, it is important that the components of the styrenic resin phase, e.g., styrene or styrene and acrylonitrile, and the crosslinking agent, e.g., divinyl benzene (DVB) be added in batchwise fashion, that is to say, substantially all at once, to the core of a crosslinked acrylate.

The monomer charge of styrene-acrylonitrile, when such a combination is used, can comprise from about 55/45 to about 85/15 weight parts of styrene to acrylonitrile with the most preferred ratio being about 76/24. If desired, minor amounts, e.g., below about 20 percent by weight, of optional monomers can be included. Examples are t-butyl styrene, p-chlorostyrene, alpha-methylstyrene, methyl methacrylate, alkyl acrylate vinylidene chloride, ethylene, propylene, isobutylene and other ethylenically unsaturated compounds copolymerizable with styrene and styrene-acrylonitrile.

The crosslinking agent, emulsifiers, initiators and chain transfer agents discussed in the previous step can also be used in this step in the same amounts to from the interpenetrating crosslinked styrene-acrylonitrile resin phase associated with the rubbery phase.

Other additives can be used such as conventional light, thermal and ultraviolet light stabilizers, antioxidants, dyes, pigments, mineral additives and fillers and reinforcing agents.

## DESCRIPTION OF THE PREFERRED EMBODIMENTS

The following examples show preferred embodiments of the compositions and processes of the claimed invention and the products formed therefrom. They are illustrative and are not intended to limit the claims in any way whatsoever.

### EXAMPLE 1

A thermoplastic elastomer comprising a crosslinked polybutyl (acrylate) and interpenetrating, crosslinked polystyrene, resin phase is prepared in a five liter, three-necked flask equipped with a heating/cooling jacket, a Teflon blade agitator, a thermometer and a nitrogen purge.

The following solutions are prepared:

Solution A:

n-butyl acrylate 751.4 g
1-3 butyleneglycol diacrylate 1.27 g

Solution B:

sodium metabisulfite 1.75 g
deionized water 27.4 g

Solution C:

ammonium persulfate 4.84 g
deionized water 76.1 g

Solution D:

styrene 250.6 g
divinyl benzene 2.65 g
(55% active solution from Dow Chemical)

Into the reaction flask is charged: 3,460 g deionized water, the following emulsifying agents: 2.1 g Sipex UB sodium lauryl sulfate (from Alcolac, Inc.) and 4.2 g Aerosol A-268, a disodium sulfosuccinate (from American Cyanamid), and 14.6 g of Solution B. The flask is stirred with $N_2$ sparged at room temperature for 30 minutes, to reduce the $O_2$ content.

Thereafter, 150.5 g of $N_2$ sparged Solution A is added. The flask contents are heated to 55 °C and then 13.5 g of Solution C is added to initiate polymerization.

After 1.5 hours of reaction, a sample shows 4.1% resin solids indicating approximately 96% percent conversion. The remainder of Solution A as well as 14.6 g Solution B and 40.4 g Solution C are added. After 2.5 hours of additional reaction time at 55 °C, a sample shows 17.2 percent resin solids, indicating greater than 97 percent conversion.

The reaction mixture is cooled to 35 °C and Solution D is added and mixed for 15 minutes at 35 °C. The reaction mixture is then heated to 60 °C and the remainder of Solution C is added. The mixture was reacted for 1.25 hours. The temperature is raised to 75 °C and maintained for 45 minutes. A final sample shows 22.4 percent resin solids indicating a conversion greater than 98 percent.

The product latex is coagulated in a solution of 0.25 weight percent $CaCl_2$ in methanol at a rate of 1600 ml methanol per 800 ml latex. The coagulum is filtered, rinsed with fresh methanol, and dried in a vacuum oven at 60 °C.

The product has a rubber content of 75% by weight, a number average latex particle diameter of 211 nanometers, a swell index in methyl ethyl ketone (MEK) of 8.1 and a percent gel fraction from MEK extraction of 91.1 percent.

## EXAMPLE 2

A thermoplastic elastomer comprising a crosslinked poly(butyl acrylate) rubbery phase and a crosslinked poly(styrene-co-acrylonitrile) resin phase is prepared according to the method of Example 1 except that 30 weight percent acrylonitrile and 70 weight percent stryene monomers are used in Solution D.

Thermoplastic elastomers prepared by the general procedures of Examples 1 and 2 are injection molded. Their physical properties are measured by standard procedures. The results are set forth in Table 1 as follows:

TABLE 1

| Injection-Molded Physical Properties of Interpolymers | | |
|---|---|---|
| Example | 1 | 2 |
| Properties | | |
| 100% modulus, psi | -- | 400 |
| 200% modulus, psi | -- | 480 |
| 300% modulus, psi | -- | 541 |
| Elongation at Break, percent | 740 | 300 |
| Tensile at Break, psi | 520 | 541 |
| Rebound resiliency, % | 60 | -- |
| Bayshore (bounce) | -- | 33 |
| Shore "A" (hardness) | 58 | -- |
| Shore "D" (hardness) | -- | 21 |
| Tear resistance, lbs. | -- | 18.4 |
| % set at 100% Elongation | -- | 25 |
| at 200% Elongation | -- | 37 |
| at 300% Elongation | -- | 56 |

The data in the Table indicate both thermoplastic elastomers in accordance with the present invention possess properties well within the ranges desired for such materials. Particularly outstanding are elongation, tensile and set.

A thermoplastic elastomer prepared by the procedure of Example 1 is extruded in an Instron Capillary Rheometer. The capillary size used is 2.56 mm x 41.4 mm in length. At an extrusion temperature of 150° C and a plunger speed of 0.2 cm/min, there is obtained a substantially ripple free smooth surfaced extruded shaped strand. There is no visual evidence of melt fracture.

These conditions are well within the range used in the prior art at which rippled surfaces and melt fracture were substantial, as reported, for example, by Narkis et al., above-mentioned.

The thermoplastic elastomers of this invention because of their demonstrated processability are, therefore, uniquely suitable to prepare articles, such as seal device gaskets, "O" rings, rollers, tires (low speed), wire and cable coatings, composites, hose and tubing, fiber optic protection systems, flexible connectors, and automobile components.

The above patents and publications are incorporated herein by reference.

Many variations will suggest themselves to those skilled in the art in light of the above, detailed description. For example, instead of using n-butyl acrylate as the rubbery phase, other alkyl (meth)acrylate monomers can be employed, such as ethyl acrylate, n-butyl methacrylate and (2-ethyl-hexyl acrylate). Instead of butylene glycol diacrylate as the crosslinking agent for the rubbery phase, other crosslinkers can be used, such as 1,3-butylene dimethacrylate, and the like. Instead of divinyl benzene as the crosslinker for the styrene, others, such as trimethylol propane triacrylate, allyl methcrylate, diallyl fumarate, and diallyl maleate and the like, can be used. Instead of a 75:25 weight ratio, 60:40 and 90:10 weight ratio of (meth)-acrylate and vinyl aromatic monomers can be used.

All such obvious variations are within the full intended scope of the appended claims.

## Claims

1. A thermoplastic elastomer comprising a crosslinked (meth)acrylate rubbery phase and an interpenetrating crosslinked styrenic resin phase, said thermoplastic elastomer being extrudable to a substantially ripple-free surfaced three-dimensional article.

2. A thermoplastic elastomer as defined in Claim 1 wherein said rubbery phase comprises a crosslinked alkyl or alkoxyalkyl (meth)acrylate.

3. A thermoplastic elastomer as defined in Claim 1 wherein said (meth)acrylate comprises butyl (meth)-acrylate.

4. A thermoplastic elastomer as defined in Claim 1 wherein said rubbery phase comprises a crosslinked n-butyl acrylate.

5. A thermoplastic elastomer as defined in Claim 1 wherein said crosslinked (meth)acrylate rubbery phase comprises from about 40 to about 90 weight percent of the crosslinked rubbery phase and the crosslinked resin phase, taken together.

6. A thermoplastic elastomer as defined in Claim 5 wherein said crosslinked (meth)acrylate rubbery phase comprises from about 60 to about 90 weight percent of the crosslinked rubbery phase and the crosslinked resin phase, taken together.

7. A thermopolastic elastomer as defined in Claim 1 wherein said resin phase comprises a crosslinked poly(vinylaromatic monomer), alone, or in further combination with a minor proportion of a copolymerized (meth)acrylonitrile monomer.

8. A thermoplastic elastomer as defined in Claim 7 wherein said resin phase comprises crosslinked polystyrene homopolymer.

9. A thermoplastic elastomer as defined in Claim 7 wherein said styrenic resin phase comprises a crosslinked styrene and acrylonitrile copolymer.

10. A thermoplastic elastomer as defined in Claim 1 comprising:

(a) a (meth)acrylate in the amount of about 60 to about 90, parts by weight.

(b) an effective amount of a crosslinking agent to polymerize said (meth)acrylate;

(c) a vinyl aromatic compound, alone, or in further combination with (meth)acrylonitrile in the amount of about 40 to about 10, parts by weight, the ratio of vinyl aromatic to (meth)acrylonitrile being from about 85 to about 55, parts by weight of the former to about 15 to about 45 parts by weight of the latter; and

(d) an effective amount of a crosslinking agent for said vinyl aromatic and said (meth)acrylonitrile, if present.

11. A thermoplastic elastomer as defined in Claim 10 wherein said crosslinking agent (b) comprises butylene glycol diacrylate.

12. A thermoplastic elastomer as defined in Claim 10 wherein said crosslinking agent (d) comprises divinyl benzene.

13. A process for the preparation of a thermoplastic elastomer comprising:

(1) emulsion polymerizing at least one (a) (meth)acrylate monomer in the presence of at least one (b) crosslinking agent to produce a crosslinked poly (meth)acrylate rubbery phase;

(2) adding to the emulsion substantially all at once a polymerizable mixture comprising:

at least one (d) crosslinking agent, and emulsion polymerizing to produce a thermoplastic elastomer having a crosslinked poly (meth)acrylate rubbery phase and an interpenetrating crosslinked styrenic resin phase, and (3) recovering said thermoplastic elastomer, said elastomer being smoothly extrudable to a substantially (c) vinyl aromatic compound, alone, or in further combination with (meth)acrylonitrile, and ripple-free surfaced three-dimensional article.

14. A process as defined in Claim 13 including the step of (4) molding or extruding said thermoplastic elastomer into a substantially ripple-free surfaced three-dimensional article.

15. A process as defined in Claim 13 wherein said monomer is an alkyl or alkoxyalkyl (meth)acrylate.

16. A process as defined in Claim 15 wherein said alkyl (meth)acrylate is n-butyl (meth)acrylate.

17. A process as defined in Claim 16 wherein said monomer is n-butyl acrylate.

18. An article molded or extruded by the process of Claim 14.

19. An article extruded by the process of Claim 14.

20. An article injection molded by the process of Claim 14.